# EUROPÄISCHE PATENTSCHRIFT

(11) **EP 2 789 502 B1**
(45) Veröffentlichungstag und Bekanntmachung des Hinweises auf die Patenterteilung: **03.07.2019**
(21) Anmeldenummer: 14155753.8
(22) Anmeldetag: 19.02.2014
(51) Int. Cl.: B60Q 1/068, B60Q 1/076

(54) **FAHRZEUGSCHEINWERFER**
VEHICLE HEADLAMP
PHARE DE VÉHICULE

(30) Priorität: 09.04.2013 AT 502432013
(43) Veröffentlichungstag der Anmeldung: 15.10.2014
(73) Patentinhaber: ZKW Group GmbH, 3250 Wieselburg (AT)
(72) Erfinder: Hloska, Branislav, 927 05 Sal'a (SK); Gajdosik, Pavol, 851 07 Bratislava (SK)
(74) Vertreter: Patentanwaltskanzlei Matschnig & Forsthuber OG

(56) Entgegenhaltungen:
- EP-A1- 0 897 829
- EP-A1- 1 854 665
- EP-A1- 2 208 639
- EP-A1- 2 213 513
- DE-A1-102005 015 937
- US-A1- 2007 127 254
- US-A1- 2007 195 543

## Beschreibung

Die Erfindung betrifft einen Fahrzeugscheinwerfer mit einem Gehäuse, einem Lichtmodul sowie einem an dem Gehäuse schwenkbar festgelegten Tragrahmen für das Lichtmodul, wobei das Lichtmodul um eine erste, quer zur Abstrahlrichtung des Fahrzeugscheinwerfers verlaufende Achse schwenkbar am Tragrahmen festgelegt und mittels einer am Tragrahmen festgelegten Stelleinheit zu einer Verschwenkung um die erste Achse antreibbar ist.

Ein gattungsgemäßer Scheinwerfer ist aus EP 2 208 639 A1 bekannt.

Bei modernen Fahrzeugscheinwerfern, die Technologien wie LED-Technologie oder Lasertechnik verwenden, weisen die Lichtmodule aufgrund der leistungsfähigen Elektrik und Elektronik zum Betrieb der Leuchtmittel, der nötigen Kühlkörper sowie der hochwertigen Glaslinsen, die bei solchen Lichtmodulen verwendet werden, ein relativ hohes Gewicht auf. Die stabile Lagerung dieser relativ schweren Lichtmodule gestaltet sich insofern schwierig, als die Lichtmodule in aller Regel nicht starr an einem Gehäuse eines Fahrzeugscheinwerfers festgelegt werden, sondern vielmehr eine verschwenkbare Festlegung am Gehäuse erfolgt, um eine Verschwenkbarkeit der Lichtmodule in mehreren Ebenen bzw. um mehrere Achsen zu ermöglichen. Zu diesem Zweck ist ein Lichtmodul an einem Tragrahmen festgelegt, der mit Hilfe einer oder mehrerer Einstellvorrichtungen verschwenkt werden kann. Bei bisherigen Lösungen wird dabei so vorgegangen, dass der Tragrahmen lediglich an einem Punkt gelenkig oder fest mit dem Gehäuse verbunden ist und jeweils eine Einstellvorrichtung vorgesehen ist, um eine Verschwenkung um eine horizontale bzw. vertikale Achse zu bewerkstelligen. Die Verschwenkbarkeit des Tragrahmens um zumindest zwei Achsen dient vor allem dazu, den Scheinwerfer hinsichtlich der Höhenrichtung und der seitlichen Richtung zu justieren, wobei zusätzliche Stelleinheiten vorgesehen sein können, um eine dynamische Leuchtweitenregelung in Abhängigkeit vom Beladungszustand des Fahrzeugs sowie von Nickbewegungen der Karosserie und/oder ein dynamisches Kurvenlicht zu realisieren. Diese dynamischen Verstellmöglichkeiten müssen unabhängig von der Voreinstellung vorgenommen werden können.

Die Lagerung des Tragrahmens an einem einzelnen Punkt ist statisch ungünstig und führt vor allem bei der Verwendung von besonders schweren Lichtmodulen zu einem Lichtbildzittern, wenn das Fahrzeug während der Fahrt Bodenunebenheiten ausgesetzt ist. Während die des dynamischen Verstellmöglichkeiten durch ein am Tragrahmen schwenkbar festgelegtes Lichtmodul, das von einer Stelleinheit angelenkt wird, unabhängig von der Verschwenkbarkeit des ganzen Tragrahmens realisiert werden kann, ist es bei Lösungen aus dem Stand der Technik hinsichtlich der Voreinstellung der Richtung der optischen Achse des Lichtmoduls und somit des Scheinwerfers notwendig, den gesamten Tragrahmen zu verschwenken.

Der Erfindung liegt daher die Aufgabe zugrunde, die Stabilität der Lagerung eines Tragrahmens für ein Lichtmodul eines Fahrzeugscheinwerfers signifikant zu erhöhen, um auch bei der Verwendung von schweren Lichtmodulen ein möglichst stabiles Lichtbild zu erhalten. Gleichzeitig soll ein solcher Fahrzeugscheinwerfer jedoch sowohl die Realisierung dynamische Verstellmöglichkeiten wie dynamisches Kurvenlicht und/oder dynamische Leuchtweitenregelung gestatten, wobei auch eine Voreinstellung bzw. Justierung der optischen Achsen in der Höhenrichtung und nach der Seite möglich sein muss. Gleichzeitig soll der optische Eindruck der Fahrzeugscheinwerfer verbessert.

Zur Lösung dieser Aufgabe ist ein Fahrzeugscheinwerfer mit den Merkmalen des Anspruchs 1 definiert. Der Fahrzeugscheinwerfer eingangs genannten Art ist erfindungsgemäß dahingehend weitergebildet, dass der Tragrahmen um eine zweite, quer zur ersten Achse verlaufende Achse schwenkbar gelagert ist und die Stelleinheit in der Richtung der zweiten Achse verschiebbar am Tragrahmen festgelegt ist. Dadurch, dass der Tragrahmen nun um eine Achse schwenkbar gelagert ist und im Gegensatz zum Stand der Technik nicht mehr nur an einem Punkt fixiert ist, ist der Tragrahmen, der das Gewicht des Lichtmoduls zu tragen hat, wesentlich besser gestützt und kann daher auch schwere Lichtmodule vibrationsarm lagern. Während bei der Einpunktlagerung im Stand der Technik durch die größeren Freiheitsgrade in der Bewegung des Tragrahmens oft Instabilitäten, die zu Verformungen des Tragrahmens führten, in Kauf genommen werden mussten, kann bei der vorliegenden Erfindung der Tragrahmen möglichst massiv ausgelegt sein, da nun der Tragrahmen nur mehr um eine Achse schwenken muss und daher eine mechanisch einwandfreie Lagerung realisiert werden kann. Die Justierung der Neutrallage des Fahrzeugscheinwerfers um die erste Achse erfolgt bei der vorliegenden Erfindung nicht durch ein Verschwenken des gesamten Tragrahmens, sondern lediglich durch Verschieben der Stelleinheit für das Kurvenlicht am Tragrahmen. Dies bietet darüber hinaus den Vorteil, dass die Verschwenkung zur Justierung der optischen Achse um dieselbe Achse erfolgt, wie die Verschwenkung zur Realisierung der dynamischen Verstellfunktion, die in aller Regel mit der optischen Achse des Lichtmoduls bzw. des Fahrzeugscheinwerfers zusammenfällt, wodurch die Justierung mit einer geringeren Auslenkung erfolgen kann, als wenn der gesamte Tragrahmen verschwenkt werden muss. Diese geringere Auslenkung ist insofern vorteilhaft, als in diesem Fall kleinere Spaltmaße zwischen dem Lichtmodul und den Blenden des Scheinwerfers eingehalten werden können, um ein Kollidieren des Lichtmoduls mit den Blenden und anderen Teilen des Fahrzeugscheinwerfers zu vermeiden. Dies gestattet größere Freiheit bei der optischen Gestaltung eines entsprechenden Fahrzeugscheinwerfers. Dadurch, dass die gemeinsame Stelleinheit zur Realisierung der Grundeinstellung und der dynamischen Verstellfunktion am Tragrahmen festgelegt ist und nicht wie im Stand der Technik üblich am Gehäuse des Fahrzeugscheinwerfers und am Tragrahmen montiert werden muss, können das Lichtmodul, der Tragrahmen und die Stelleinheit als Montageeinheit bereitgestellt werden, so dass ein erfindungsgemäßer Fahrzeugscheinwerfer besonders einfach zusammenzubauen ist.

Bevorzugt verläuft die erste Achse vertikal. Erfindungsgemäß verläuft die zweite Achse horizontal. In diesem Fall dient die in Richtung der zweiten Achse verschiebbare Stelleinheit der Realisierung eines dynamischen Kurvenlichts und die Verschiebung der Stelleinheit entlang der zweiten Achse führt zu einer Justierung der Neutrallage des Lichtmoduls des Fahrzeugscheinwerfers nach der Seite.

Gemäß einer bevorzugten Ausführungsform der vorliegenden Erfindung ist der Fahrzeugscheinwerfer dahingehend weitergebildet, dass das Lichtmodul unter Zwischenschaltung eines von der Stelleinheit angelenkten Steuerteils am Tragrahmen festgelegt ist. Das Steuerteil verbindet hierbei beispielsweise den Kühlkörper des Lichtmoduls mit dem Tragrahmen und bietet gleichzeitig einen Hebelarm für die Anlenkung durch die am Tragrahmen verschiebbare Stelleinheit und fungiert somit sowohl als Verbindung des Lichtmoduls mit dem Tragrahmen als auch als Steuerhebel für eine Verschwenkung um die vertikale Achse, wobei die Steuereinheit den Anlenkungspunkt für die Stelleinheit außerhalb des Bereichs des Tragrahmens und des Kühlkörpers des Lichtmoduls darbieten kann, so dass eine größere Gestaltungsfreiheit hinsichtlich der Anordnung der Stelleinheit zur Verschwenkung um die vertikale Achse erreicht wird.

Wie bereits weiter oben beschrieben, ist die Stelleinheit für die Justierung der optischen Achse des Lichtmoduls bzw. des Fahrzeugscheinwerfers in der Richtung der zweiten Achse, auf der der Tragrahmen schwenkbar gelagert ist, verschiebbar. Während das Verschwenken des Lichtmoduls, gegebenenfalls unter Zwischenschaltung des Steuerteils, beispielsweise für die Realisierung eines Kurvenlichts, motorisch durch die Stelleinheit erfolgt, ist dies für die Justierung der optischen Achse nach der Seite nicht notwendig. Die Erfindung ist daher bevorzugt dahingehend weitergebildet, dass die Stelleinheit am Tragrahmen mittels eines manuell antreibbaren Schraubgetriebes in Richtung der zweiten Achse verschiebbar ist. Schraubgetriebe werden bei Fahrzeugscheinwerfern regelmäßig zur Einstellung der Leuchtweite verwendet, wobei die Schraubgetriebe häufig mittels Kegelrädern aus der Achse der Gewindespindel ausgelenkt werden und beispielsweise an der Rückseite bzw. der Oberseite des Scheinwerfers aus dem Gehäuse herausgeführt und mit entsprechenden Bedienungselementen verbunden sind.

Gemäß einer bevorzugten Ausführungsform der vorliegenden Erfindung ist der Tragrahmen mittels einer weiteren Stelleinheit zur Verschwenkung um die zweite Achse antreibbar, wodurch zusätzlich zur ersten dynamischen Verstellbarkeit eine dynamische Verstellbarkeit um die zweite Achse, beispielsweise in Abhängigkeit vom Beladungszustand und dynamischen Nickbewegungen der Karosserie eines Fahrzeugs realisiert werden kann.

Zur Voreinstellung bzw. Justierung der optischen Achse des Lichtmoduls bzw. des Fahrzeugscheinwerfers gemäß der vorliegenden Erfindung muss jedoch auch eine Möglichkeit bereitgestellt sein, den Tragrahmen unabhängig von der soeben beschriebenen, weiteren Stelleinheit zur Verschwenkung um die zweite Achse verschwenken zu können. Gemäß einer bevorzugten Ausführungsform der vorliegenden Erfindung wird dies dadurch möglich, dass die weitere Stelleinheit zur Verschwenkung des Tragrahmens um die zweite Achse mittels eines manuell antreibbaren Schraubgetriebes in Verschwenkrichtung des Tragrahmens verschiebbar ist. Das manuell antreibbare Schraubgetriebe, welches, wie schon im weiter oben beschriebenen Fall, ebenfalls mittels eines Kegelradgetriebes und entsprechenden Bedienteilen aus dem Gehäuse des Fahrzeugscheinwerfers herausgeführt werden kann, verschiebt somit die weitere Stelleinheit zur Verschwenkung um die zweite Achse in die Stellrichtung der weiteren Stelleinheit und somit in die Richtung der Verschwenkung des Tragrahmens. Die Bewegungen des manuell antreibbaren Schraubgetriebes sowie der motorisierten Stelleinheit werden dadurch überlagert, so dass eine Voreinstellung durch Verschieben der Stelleinheit erfolgt und die dynamische Leuchtweitenregulierung über die motorisierte Stelleinheit bewerkstelligt wird.

Im Sinne der vorliegenden Erfindung ist es bevorzugt, dass eine Stelleinheit als Elektromotor ausgebildet ist, dessen Antrieb eine Gewindespindel eines Schraubgetriebes antriebt. Eine Stelleinheit ist somit nicht mit einer manuellen Verstellmöglichkeit, wie sie beim Justieren der optischen Achse des Lichtmoduls zum Einsatz gelangt, zu verwechseln, sondern ist vielmehr eine motorisierte Stellvorrichtung, die in jeder geeigneten Form über die Bordelektronik eines Fahrzeugs angesprochen werden kann, um die dynamische Verschwenkung des Lichtmoduls im Sinne eines Kurvenlichts bzw. im Sinne der Leuchtweitenregulierung zu bewerkstelligen.

Die Erfindung wird nachfolgend anhand eines in der Zeichnung schematisch dargestellten Ausführungsbeispiels näher erläutert. In dieser zeigen:
Fig. 1 eine perspektivische Ansicht des erfindungsgemäßen Fahrzeugscheinwerfers,
Fig. 2 eine weitere perspektivische Ansicht des erfindungsgemäßen Fahrzeugscheinwerfers aus einem anderen Blickwinkel,
Fig. 3 eine Explosionsdarstellung wesentlicher Teile des erfindungsgemäßen Fahrzeugscheinwerfers in perspektivischer Ansicht,
Fig. 4 eine Frontalansicht des erfindungsgemäßen Fahrzeugscheinwerfers,
Fig. 5 eine Schnittdarstellung nach dem Schnitt B-B gemäß Fig. 4,
Fig. 6 eine Draufsicht auf einen erfindungsgemäßen Fahrzeugscheinwerfer und
Fig. 7 eine Schnittdarstellung gemäß Schnitt A-A gemäß Fig. 4.

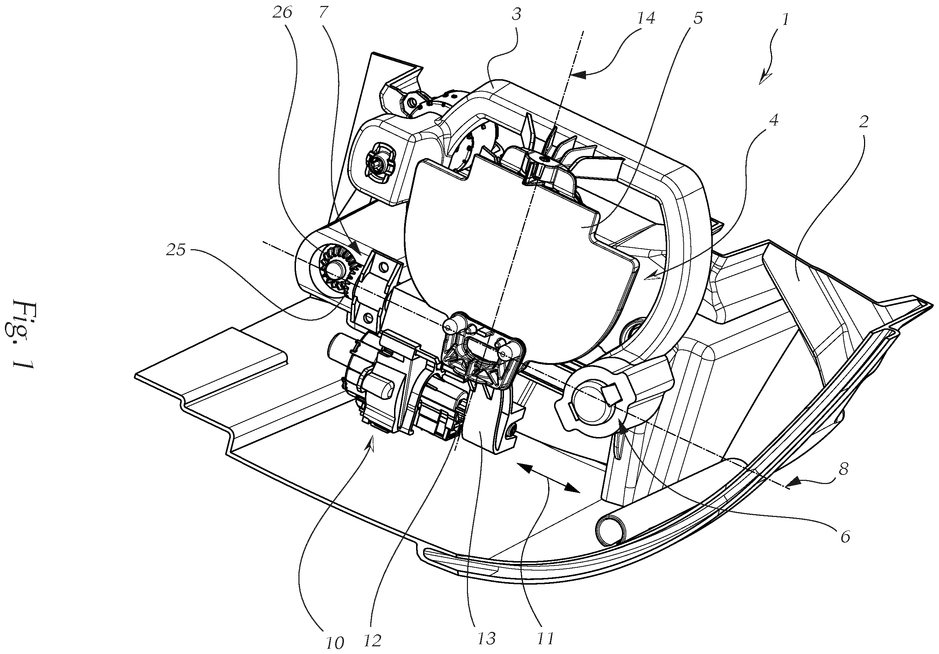

In Fig. 1 ist mit 1 ein erfindungsgemäßer Fahrzeugscheinwerfer bezeichnet, wobei aus Gründen der Übersichtlichkeit lediglich ein Teil des Gehäuses 2 dargestellt ist. Nicht dargestellt ist eine Streuscheibe bzw. Abdeckscheibe, die den Fahrzeugscheinwerfer nach vorne abdeckt. Ein Tragrahmen 3 für ein Lichtmodul 4, von dem in den Fig. lediglich ein Kühlkörper 5 dargestellt ist, auf dem entsprechende Leuchtmittel und Lichtleiteinrichtungen, wie Blenden, Filter und Linsen angeordnet werden, ist an zwei Festlegungspunkten 6 und 7 am Gehäuse 2 befestigt, wodurch eine zweite Achse 8 gebildet wird, um die der Tragrahmen 3 schwenkbar gelagert ist. Der Festlegungspunkt 6 kann beispielsweise als eine Rast- oder Schnappverbindung eines Kugel- oder Scharniergelenks vorliegen, während im Festlegungspunkt 7 die zweite Achse 8 in Form einer weiter unten beschriebenen Gewindespindel gebildet ist, die über Kegelräder 25, 26 einer Verschiebung der Stelleinheit 10 in Richtung der feststehenden, horizontalen Achse 8 und somit in Richtung des Doppelpfeils 11 dient. Die Stelleinheit 10 ist als Getriebemotor ausgebildet, dessen Antrieb eine Gewindespindel eines Schraubgetriebes antreibt, wodurch der Stellarm 12 der Stelleinheit 10 ebenfalls in Richtung der feststehenden, horizontalen Achse 8 bzw. des Doppelpfeils 11 verschoben wird. Die Bewegung der Stelleinheit 10 durch Verschieben der Stelleinheit 10 am Tragrahmen 3 sowie die Bewegung des Stellarmes 12 der Stelleinheit 10 in Richtung der feststehenden, horizontalen Achse 8 bzw. in Richtung des Doppelpfeils 11 wird auf ein Steuerteil 13 übertragen, unter dessen Zwischenschaltung der Kühlkörper 5 bzw. das Lichtmodul 4 um eine vertikale erste Achse 14 schwenkbar festgelegt ist.

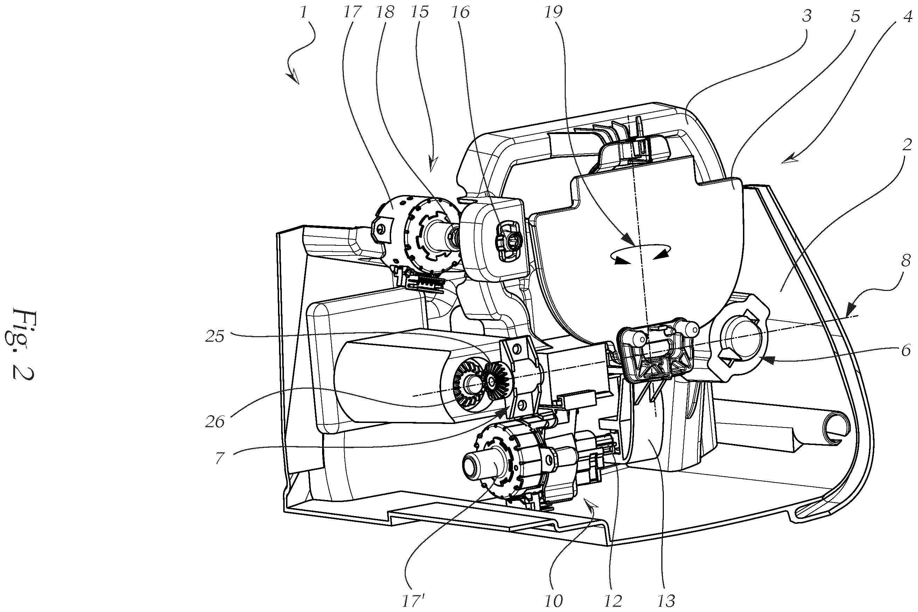

In Fig. 2 sind die Bauteile aus Fig. 1 aus einer anderen Blickrichtung zu sehen und es ist eine weitere Stelleinheit 15 zu erkennen, die an einem Befestigungspunkt 16 mit dem Tragrahmen 3 verbunden ist und den Tragrahmen 3 zur Verschwenkung um die zweite Achse 8 antreibt. Die Stelleinheiten 10 und 15 bestehen im Wesentlichen aus Elektromotoren 17, 17', deren Antrieb einen Stellarm 18 antreibt. Die Gewindespindel der Stelleinheit 10 ist in Fig. 2 nicht zu erkennen, da in diesem Fall die Bewegung des Schraubgetriebes auf den Stellarm 12 und in weiterer Folge auf das Steuerteil 13 übertragen wird. Dadurch erfolgt eine Verschwenkung des Steuerteils 13 im Sinne des Doppelpfeils 19 und folglich auch des Kühlkörpers 5 bzw. des gesamten Lichtmoduls 4. Es leuchtet ein, dass auch andere Möglichkeiten bestehen, die Stelleinheiten zu realisieren, wobei im Rahmen der vorliegenden Erfindung insbesondere Linearmotoren eingesetzt werden können.

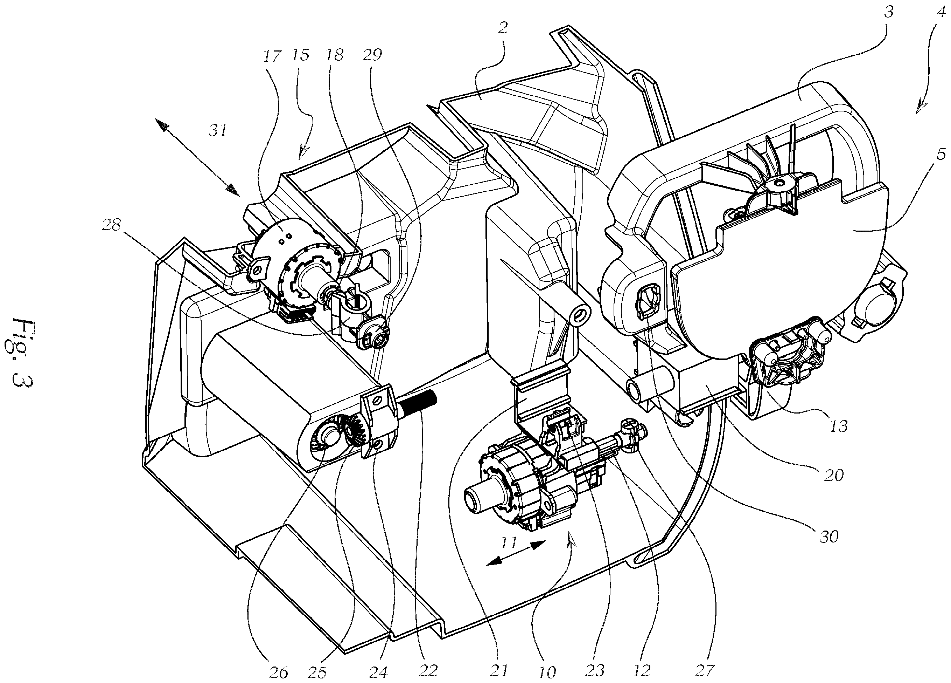

In Fig. 3 ist die verschiebliche Lagerung der Stelleinheit 10 am Tragrahmen 3 besser zu erkennen. Die Stelleinheit 10 weist ein einer Schiene 20 des Tragrahmens 3 entsprechend geformtes Führungsteil 21 auf, welches die Schiene 20 formschlüssig umgreift und eine Verschiebung in Richtung des Doppelpfeils 11 gestattet. Ein manuell antreibbares Schraubgetriebe zum Verschieben der Stelleinheit 10 auf der Schiene 20 des Tragrahmens 3 wird von einer Gewindespindel 22 und einer entsprechenden Getriebemutter 23 am Halteteil 21 gebildet. Die Gewindespindel 22 ist mittels einer Schelle 24 am Gehäuse 2 festgelegt und bildet einen Teil der horizontal feststehenden, zweiten Achse 8, wie sie in den Fig. 1 und 2 dargestellt ist. Die Gewindeschraube 22 weist an ihrem Ende ein Kegelrad 25 auf, das mit einem entsprechenden weiteren Kegelrad 26 zusammenwirkt, um eine Verschiebbarkeit der Stelleinheit 10 von der Hinterseite des Fahrzeugscheinwerfers zu ermöglichen. In Fig. 3 ist weiters die Verbindung der Stelleinheiten 10, 15 mit den entsprechenden Anlenkungspunkten am Tragrahmen 3 bzw. an dem Steuerteil 13 zu erkennen. Im Fall der Stelleinheit 10 weist der Stellarm 12 an seinem Ende einen Gelenkskopf 27 auf, der in eine entsprechende Aufnahme am Steuerteil 13 eingreift und durch Verschieben des Stellarmes 12 in Richtung des Doppelpfeils 11 das Verschwenken des Steuerteils 13 und damit des Lichtmoduls 4 nach der Seite bewirkt. Die Verbindung der Stelleinheit 15 mit ihrem Stellarm 18 erfolgt über einen Kugelkopf am Ende des Stellarms 18, der in eine entsprechende Klammer 28 eingreift, die wiederum im Sinne eines Bajonettverschlusses mit ihrem Endteil 29 in ein entsprechendes Aufnahmeteil 30 am Tragrahmen 3 eingreifen und mit diesem verriegelt werden kann. Bei einer Verschiebung des Stellarmes 18 in Verschwenkrichtung des Tragrahmens um die horizontale Achse, welche Verschwenkrichtung durch den Doppelpfeil 31 versinnbildlicht ist, wird somit auch der Tragrahmen 3 in die Richtung des Doppelpfeils 31 mitgenommen und somit um die in den Fig. 1 und 2 dargestellte, zweite Achse 8 verschwenkt.

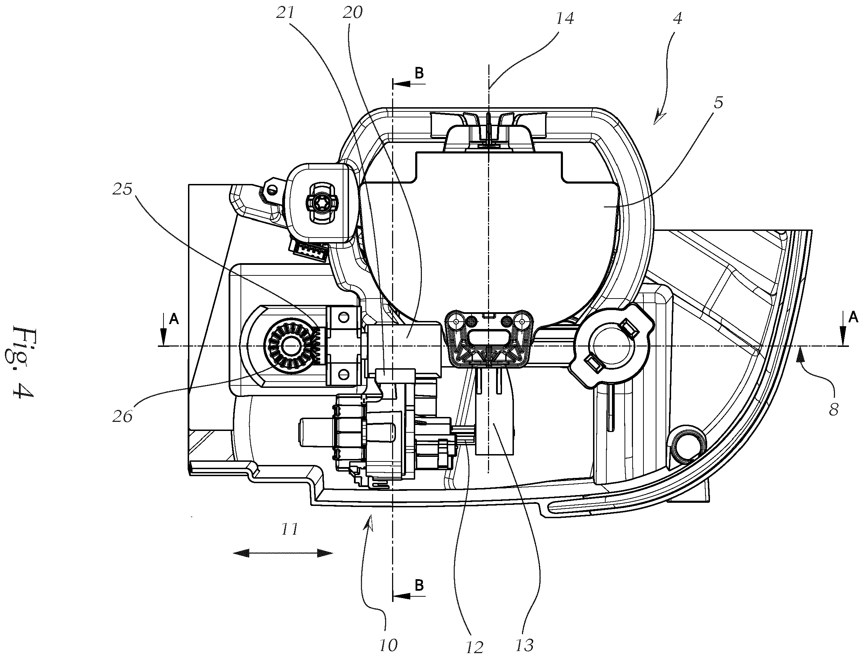

In der Frontalansicht nach Fig. 4 ist zu erkennen, dass sich die Verschiebungsbewegungen des Halteteils 21 an der Schiene 20 sowie des Steuerarms 12 der Stelleinheit in Richtung des Doppelpfeils 11 überlagern und jeweils am Steuerteil 13, an dem der Kühlkörper 5 des Lichtmoduls 4 festgelegt ist, zur Wirkung gelangen. Somit kann durch die manuell bewirkte Verschiebung der Stelleinheit 10 mit Hilfe der in Fig. 3 dargestellten Gewindespindel 22, deren Kegelrad 25 in Fig. 4 zu erkennen ist, zu einer Voreinstellung bzw. Justierung der Leuchtrichtung des Lichtmoduls 4 nach der Seite genützt werden, während die motorische Verstellung mittels der Stelleinheit 10 zur Realisierung eines dynamischen Kurvenlichts eingesetzt wird. Die Schnittlinie A-A in Fig. 4 fällt mit der feststehenden, horizontalen Achse 8 zusammen.

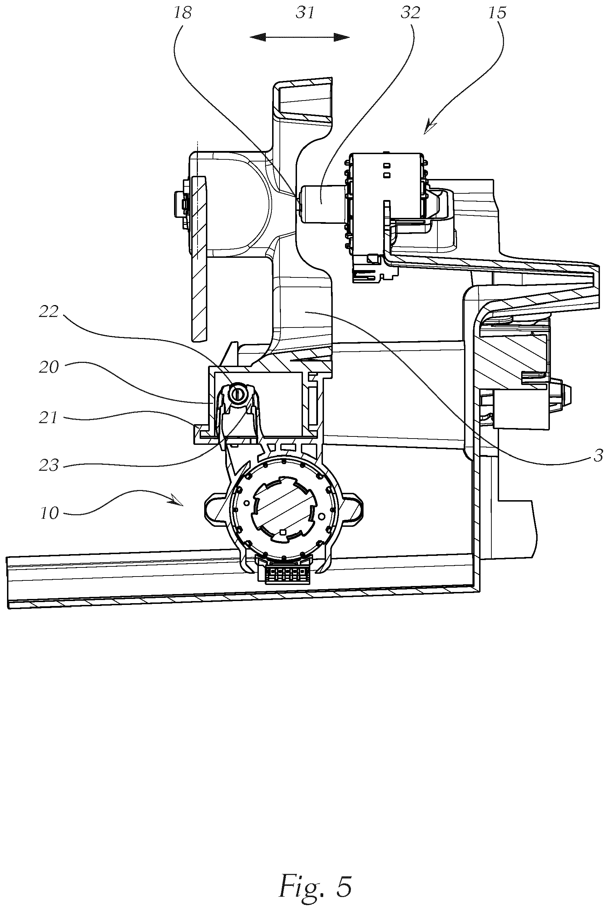

In Fig. 5 ist das Zusammenwirken des Halteteils 21 mit der Schiene 20 des Tragrahmens zu erkennen, wobei das Halteteil 21 die Schiene 20 des Tragrahmens formschlüssig umfasst und eine stabile Verbindung zwischen der Stelleinheit 10 und dem Tragrahmen 3 herstellt. Die Stelleinheit 15 weist ebenfalls eine Getriebeeinheit, die mit 32 bezeichnet ist, auf, um eine Verschiebung des Stellarms 18 in Richtung des Doppelpfeils 31 und damit eine Verschwenkung um die zweite Achse 8 zu ermöglichen.

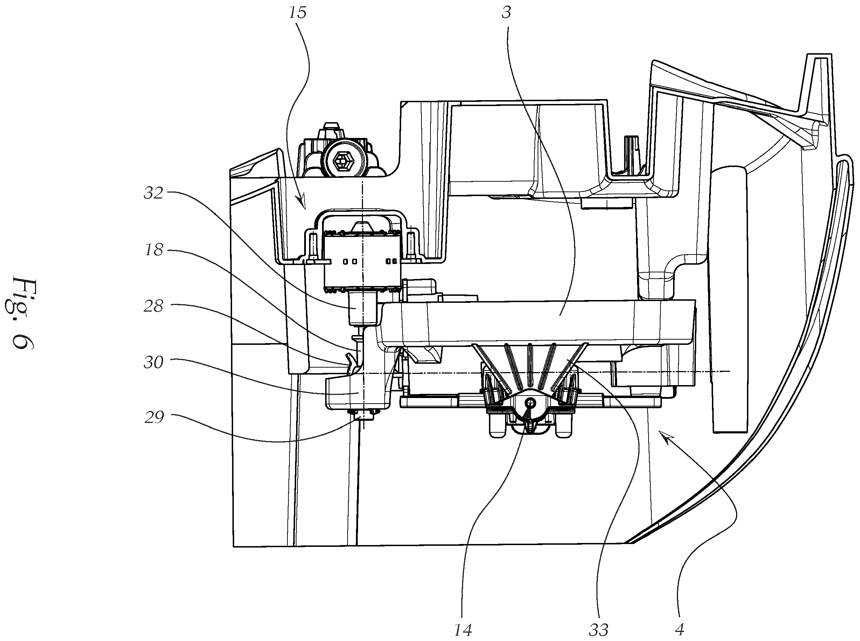

In Fig. 6 ist die Stelleinheit 15 mit der Getriebeeinheit 32 und dem Stellarm 18 noch einmal deutlicher dargestellt. Es ist weiters die Klammer 28 zu erkennen, deren Endteil 29 in einem entsprechenden Aufnahmeteil 30 am Tragrahmen 3 im Sinne eines Bajonettverschlusses aufgenommen und verriegelt ist. Der Tragrahmen 3 weist an seiner Oberseite eine Auskragung 33 zur Lagerung des Lichtmoduls 4 auf und definiert somit die vertikale erste Achse 14 zur Verschwenkung des Lichtmoduls 4 zur Realisierung eines dynamischen Kurvenlichts.

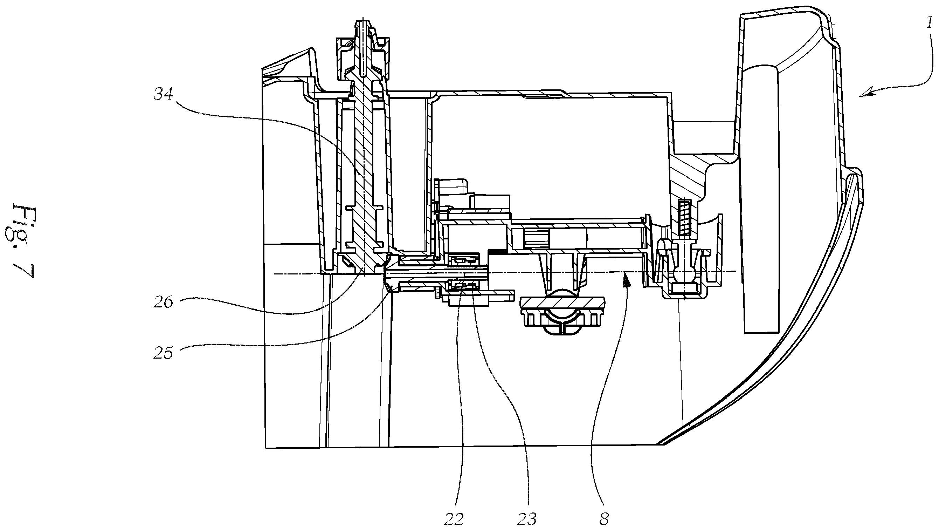

In der Schnittdarstellung nach Fig. 7 ist zu erkennen, dass die Gewindespindel 22 mittels der Kegelräder 25 und 26 sowie einer entsprechenden Welle 34 von der Rückseite des Fahrzeugscheinwerfers 1 manuell antreibbar ist. In Fig. 7 ist weiters die Getriebemutter 23 zu erkennen, die zusammen mit der Gewindespindel 22 das manuell antreibbare Schraubgetriebe zur Verschiebung der Stelleinheit 10 am Tragrahmen 3 in Richtung der feststehenden, horizontalen Achse 8 bildet.

Wann immer in der vorangehenden Beschreibung Orientierungsangaben, wie horizontal, vertikal oder ähnliches, angegeben sind, so beziehen sich diese Orientierungsangaben auf einen Fahrzeugscheinwerfer im in einem Fahrzeug eingebauten Zustand.

## Patentansprüche

1. Fahrzeugscheinwerfer mit einem Gehäuse (2), einem Lichtmodul (4) sowie einem an dem Gehäuse (2) schwenkbar festgelegten Tragrahmen (3) für das Lichtmodul (4), wobei das Lichtmodul (4) um eine erste, quer zur Abstrahlrichtung des Fahrzeugscheinwerfers verlaufende Achse (14) schwenkbar am Tragrahmen (3) festgelegt und mittels einer am Tragrahmen (3) festgelegten Stelleinheit (10) zu einer Verschwenkung um die erste Achse (14) antreibbar ist, wobei der Tragrahmen (3) um eine zweite, quer zur ersten Achse (14) verlaufende Achse (8) schwenkbar gelagert ist und die Stelleinheit (10) in der Richtung der zweiten Achse (8) verschiebbar am Tragrahmen (3) festgelegt ist, **dadurch gekennzeichnet, dass** die Stelleinheit (10) am Tragrahmen (3) mittels eines manuell antreibbaren Schraubgetriebes in Richtung der zweiten Achse (8) verschiebbar ist, wobei die zweite Achse (8) horizontal feststehend ist, wobei
die Stelleinheit (10) ein einer Schiene (20) des Tragrahmens (3) entsprechend geformtes Halteteil (21) aufweist, welches die Schiene (20) formschlüssig umgreift und eine Verschiebung der Stelleinheit (10) auf der Schiene (20) des Tragrahmens (3) gestattet, wobei
das manuell antreibbare Schraubgetriebe von einer Gewindespindel (22) und einer entsprechenden Getriebemutter (23) am Halteteil (21) gebildet ist, wobei
die Gewindespindel (22) mittels einer Schelle (24) am Gehäuse (2) festgelegt ist und einen Teil der horizontal feststehenden, zweiten Achse (8) bildet, wobei
die Gewindeschraube (22) an ihrem Ende ein Kegelrad (25) aufweist, das mit einem entsprechenden weiteren Kegelrad (26) zusammenwirkt, um eine Verschiebbarkeit der Stelleinheit (10) von der Hinterseite des Fahrzeugscheinwerfers zu ermöglichen.

2. Fahrzeugscheinwerfer nach Anspruch 1, **dadurch gekennzeichnet, dass** die erste Achse (14) vertikal und die zweite Achse (8) horizontal verläuft.

3. Fahrzeugscheinwerfer nach Anspruch 1 oder 2, **dadurch gekennzeichnet, dass** das Lichtmodul (4) unter Zwischenschaltung eines von der Stelleinheit (10) angelenkten Steuerteils (13) am Tragrahmen (3) festgelegt ist.

4. Fahrzeugscheinwerfer nach einem der Ansprüche 1 bis 3, **dadurch gekennzeichnet, dass** der Tragrahmen (3) mittels einer weiteren Stelleinheit (15) zur Verschwenkung um die zweite Achse (8) antreibbar ist.

5. Fahrzeugscheinwerfer nach einem der Ansprüche 1 bis 4, **dadurch gekennzeichnet, dass** die weitere Stelleinheit (15) zur Verschwenkung des Tragrahmens (3) um die zweite Achse (8) mittels eines manuell antreibbaren Schraubgetriebes in Verschwenkrichtung des Tragrahmens (3) verschiebbar ist.

6. Fahrzeugscheinwerfer nach einem der Ansprüche 1 bis 5, **dadurch gekennzeichnet, dass** eine Stelleinheit (10, 15) als Elektromotor (17, 17') ausgebildet ist, dessen Antrieb eine Gewindespindel (22) eines Schraubgetriebes antreibt.

## Claims

1. A vehicle headlight having a housing (2), a light module (4), and a support frame (3), pivotably fixed to the housing (2), for the light module (4), wherein the light module (4) is fixed to the support frame (3) pivotable about a first axis (14) running transverse to the irradiation direction of the vehicle headlight and may be driven by means of an actuator (10) fixed on the support frame (3) to pivot about the first axis (14), wherein the support frame (3) is borne pivotable about a second axis (8) running transverse to the first axis (14) and the actuator (10) is fixed to the support frame (3) and is displaceable towards the second axis (8), **characterized in that** the actuator (10) on the support frame (3) is displaceable towards the second axis (8) by means of a manually driven worm gear, the second axis (8) being horizontally stationary, wherein
the actuator (10) has holding part (21), molded corresponding to a track (20) of the support frame (3), that encloses the track (20) in a positive fit and permits displacement of the actuator (10) on the track (20) of the support frame (3), wherein
the manually drivable worm gear is formed by a threaded spindle (22) and a corresponding gear nut (23) on the holding part (21), wherein
the threaded spindle (22) is fixed to the housing (2) by means of a clip (24) and forms a part of the horizontally stationary second axis (8), wherein
the threaded screw (22) at its end has a bevel gear (25) that cooperates with a corresponding additional bevel gear (26) to enable the actuator (10) to be displaced from the back side of the vehicle headlight.

2. The vehicle headlight according to claim 1, **characterized in that** the first axis (14) runs vertically and the second axis (8) runs horizontally.

3. The vehicle headlight according to claim 1 or 2, **characterized in that** the light module (4) is fixed on the support frame (3) with the interpositioning of a control part (13) linked by the actuator (10).

4. The vehicle headlight according to any of claims 1 through 3, **characterized in that** the support frame (3) may be driven to pivot about the second axis (8) by means of an additional actuator (15).

5. The vehicle headlight according to any of claims 1 through 4, **characterized in that** the additional actuator (15), for pivoting the support frame (3) about the second axis (8) by means of a manually drivable worm gear, may be displaced in the pivot direction of the support frame (3).

6. The vehicle headlight according to any of claims 1 through 5, **characterized in that** one actuator (10, 15) is embodied as an electric motor (17, 17'), the drive of which drives a threaded spindle (22) of a worm gear.

## Revendications

1. Phare de véhicule comportant un boîtier (2), un module d'éclairage (4) ainsi qu'un cadre de support (3) pour le module d'éclairage (4) fixé de manière pivotante au boîtier (2), dans lequel le module d'éclairage (4) est fixé au cadre de support (3) de façon pivotante autour d'un premier axe (14) s'étendant transversalement à la direction de rayonnement du phare de véhicule et est actionnable pour un pivotement autour du premier axe (14) au moyen d'une unité de réglage (10) fixée au cadre de support (3), dans lequel le cadre de support (3) est monté pivotant autour d'un second axe (8) s'étendant transversalement au premier axe (14), et l'unité de réglage (10) est fixée au cadre de support (3) déplaçable dans la direction du second axe (8), **caractérisé par le fait que** l'unité de réglage (10) est déplaçable sur le cadre de support (3) en direction du second axe (8) au moyen d'un entraînement à vis actionnable manuellement, le second axe (8) étant fixé horizontalement,
l'unité de réglage (10) présentant une partie de maintien (21) de forme correspondant à un rail (20) du cadre de support (3), laquelle entoure par coopération de formes le rail (20) et permet un déplacement de l'unité de réglage (10) sur le rail (20) du cadre de support (3),
l'entraînement à vis actionnable manuellement étant formé par une tige filetée (22) et un écrou d'entraînement correspondant (23) sur la partie de maintien (21),
la tige filetée (22) étant fixée au boîtier (2) au moyen d'un collier (24) et formant une partie du second axe (8) fixé horizontalement,
la vis filetée (22) présentant sur son extrémité un pignon conique (25) qui coopère avec un autre pignon conique correspondant (26) pour permettre une aptitude au déplacement de l'unité de réglage (10) à partir du côté arrière du phare de véhicule.

2. Phare de véhicule selon la revendication 1, **caractérisé par le fait que** le premier axe (14) s'étend verticalement, et le second axe (8), horizontalement.

3. Phare de véhicule selon l'une des revendications 1 ou 2, **caractérisé par le fait que** le module d'éclairage (4) est fixé au cadre de support (3) avec interposition d'une partie de commande (13) articulée à partir de l'unité de réglage (10).

4. Phare de véhicule selon l'une des revendications 1 à 3, **caractérisé par le fait que** le cadre de support (3) est actionnable pour le pivotement autour du second axe (8) au moyen d'une autre unité de réglage (15).

5. Phare de véhicule selon l'une des revendications 1 à 4, **caractérisé par le fait que** l'autre unité de réglage (15) est déplaçable dans une direction de pivotement du cadre de support (3) pour le pivotement du cadre de support (3) autour du second axe (8) au moyen d'un entraînement à vis actionnable manuellement.

6. Phare de véhicule selon l'une des revendications 1 à 5, **caractérisé par le fait qu'**une unité de réglage (10, 15) est réalisée sous forme de moteur électrique (17, 17'), dont l'entraînement actionne une tige filetée (22) d'un entraînement à vis.
